# EUROPÄISCHE PATENTSCHRIFT

(11) **EP 3 159 821 B1**
(45) Veröffentlichungstag und Bekanntmachung des Hinweises auf die Patenterteilung: **15.08.2018**
(21) Anmeldenummer: 16002258.8
(22) Anmeldetag: 21.10.2016
(51) Int. Cl.: G06F 21/55, G06F 21/75, G06F 21/77

(54) **PROZESSOR-SYSTEM MIT APPLET SECURITY SETTINGS**
PROCESSOR SYSTEM WITH APPLET SECURITY SETTINGS
SYSTÈME AVEC PROCESSEUR PRÉSENTANT DES RÉGLAGES DE SÉCURITÉ POUR APPLETS

(30) Priorität: 23.10.2015 DE 102015013760
(43) Veröffentlichungstag der Anmeldung: 26.04.2017
(73) Patentinhaber: Giesecke+Devrient Mobile Security GmbH, 81677 München (DE)
(72) Erfinder: Köglmeier, Helmut, 81547 München (DE); Gibis, Oliver, 81825 München (DE)

(56) Entgegenhaltungen:
- AHMADOU SERE ET AL: "Evaluation of Countermeasures Against Fault Attacks on Smart Cards", INTERNATIONAL JOURNAL OF SECURITY AND ITS APPLICATIONS, Bd. 5, Nr. 2, 1. April 2011 (2011-04-01), Seiten 49-60, XP055201621,
- Raja Akram ET AL: "Enhancing Java Runtime Environment for Smart Cards Against Runtime Attacks", , 21. September 2015 (2015-09-21), XP055339750, https://pure.royalholloway.ac.uk/portal/en /publications/enhancing-java-runtime-envir onment-for-smart-cards-against-runtime-att acks%283a7568c3-af52-4aa7-8a83-514e6660f0f d%29.html Gefunden im Internet: URL:https://pure.royalholloway.ac.uk/porta l/files/25117130/ESORICS_2015_submission_2 10.pdf [gefunden am 2017-01-27]

## Beschreibung

### Gebiet der Erfindung

Die Erfindung betrifft ein Prozessor-System mit einem darin installierten Betriebssystem, einem Security Manager, einem unter dem Betriebssystem lauffähigen installierten oder installierbaren Applet (oder mehrere Applets; diese können auch nachladbar sein), einer Registry, in der im Datenträger installierte Applets und zugeordnete Security Settings (in etwa: Sicherheitseinstellungen) für das Betriebssystem gegenüber Applets registriert sind. Die Erfindung betrifft ein Verfahren zum Installieren eines Applet in ein Prozessor-System, sowie ein Verfahren zum Ausführen eines in einem Prozessor-System installierten Applet.

### Stand der Technik

Prozessor-Systeme werden in unterschiedlichsten Geräten verwendet, wie Personal Computern (PCs), mobilen Endgeräten, z.B. Smartphones, und Datenträgern. Datenträger können insbesondere die Gestalt von Chipkarten haben - z.B. (U)SIM-Karten (SIM = Subscriber Identity Module) oder UICCs (UICC = Universal Integrated Circuit Card) für Mobilfunksysteme oder Zahlungsverkehrskarten oder Identitätskarten oder Datenseiten von Identitätsdokumenten -, oder von einlötbaren bzw. eingelöteten Modulen - z.B. embedded UICCs oder M2M-Modulen (M2M = Machine to Machine).

Prozessor-Systeme, die ein Betriebssystem und Applets enthalten, wie beispielsweise Java Cards, aber auch native Datenträger, oder mobile Endgeräte wie Smartphones (Applikationen / Applets werden im mobilen Endgerät üblicherweise als Apps bezeichnet), enthalten eine Registry, in welcher eine Auflistung aller installierten Applets enthalten ist, sowie eine Auflistung von Security Settings für die Verhaltensweise des Betriebssystems gegenüber installierten Applets. Nachfolgend wird der Stand der Technik vorrangig am Beispiel eines Datenträgers, insbesondere einer Java Card, betrachtet.

Bei einer Java Card gemäß JCRE (Java Card Runtime Environment) Version 3.0.1, beispielsweise wird gemäß Kapitel 3 "Java Card Applet Lifetime" ein Applet in der Java Card installiert, indem mittels des Kommandos INSTALL eine Instanz des Applet in der Java Card angelegt wird und durch Aufruf der Methode Applet.register in der Java Card Registry registriert wird. Zusammen mit dem Applet können der Java Card für die Installation Install Parameter bereitgestellt werden, also bei der Installation des Applet mit zu installierende Parameter. Die Install Parameter umfassen beispielsweise herkömmliche Parameter wie Applet Identifer AID oder sogenannte Privileges, also gewissermaßen Vorzugsrechte und Privilegien, die das Applet hat, aber auch für das gesamte Applet geltende Security Settings, in denen z.B. anzuwendende Sicherungsmaßnahmen angegeben sind.

Funktional werden Applets in Datenträgern oder Apps in mobilen Endgeräten für die Bereitstellung eines Dienstes wie z.B. eines Mobilfunkdienstes oder Zahlungsdienstes oder Identifizierungsdienstes oder Authentisierungsdienstes, verwendet. Konstruktiv ist ein Applet aus Elementen (z.B. Programmcodes, Bytecodes, Objekten etc.) aufgebaut, die in ihrer Gesamtheit die Computerimplementierung des Dienstes darstellen. Manche der Code-Teile des Applet führen unkritische Routine-Rechenvorgänge aus. Andere Code-Teile des Applet führen sicherheitskritische Rechenvorgänge aus, wie beispielsweise die Verarbeitung von geheimen Daten wie z.B. kryptographischen Schlüsseln mittels kryptographischer Algorithmen.

Mittels Seitenkanalangriffen, z.B. Abhorchen von Stromverbrauch oder elektromagnetischer Strahlung eines Datenträgers, oder aktiven Angriffen (Fault Attacks) lassen sich aus ungeschützten Rechenvorgängen, bei denen geheime Daten wie z.B. kryptographische Schlüssel verwendet werden, die geheimen Daten, z.B. kryptographischen Schlüsseln, aus dem Rechenvorgang ausspähen. Um Seitenkanalangriffe zu erschweren oder verhindern, werden Sicherheitsmaßnahmen angewandt. Eine bekannte Sicherheitsmaßnahme ist die Doppelausführung oder Mehrfachausführung, die darin besteht, einen Rechenvorgang zweimal oder öfter durchzuführen, die dabei erzielten zwei oder mehr Rechenergebnisse zu vergleichen und das Rechenergebnis nur bei Übereinstimmung aller Rechenergebnisse weiter zu verwenden. Weitere mögliche Sicherheitsmaßnahmen sind das Zuschalten eines Jitters oder von Stromrauschen, spezielle Vorschriften für die Vorgehensweise bei einem Auslesen von Speichern (z.B. Auslesen soll stets nur direkt aus dem nichtflüchtigen Speicher erfolgen statt aus einem Cache-Speicher). Anzuwendende Sicherheitsmaßnahmen werden in den Security Settings (in etwa "Sicherheitseinstellungen") der Registry des Datenträgers für das Applet eingetragen, z.B. durch Bezugnahme auf einen Applet Identifier AID des Applet. Dabei gilt eine Sicherheitsmaßnahme stets für ein bestimmtes Applet, und dabei für das Applet als Ganzes.

Applets haben teilweise ein umfangreiches Volumen an Code, von dem nur ein Teil - ggf. nur ein geringer Teil - sicherheitskritisch ist. Prinzipiell würde es genügen, sicherheitskritische Code-Teile eines Applet mit Sicherheitsmaßnahmen abzusichern. Allerdings hat das Applet gegenüber dem Betriebssystem keine Berechtigung zu einem steuernden Zugriff, um vom Betriebssystem angewandte Sicherheitsmaßnahmen zu steuern, z.B. Code-Teilselektiv ein- oder auszuschalten. Das Betriebssystem umgekehrt hat keine Möglichkeit, im Applet-Code als Ganzem sicherheitskritische Code-Teile zu erkennen und unterschiedlich zu unkritischen Code-Teilen zu behandeln.

Ahmadou Sere et al.: "Evaluation of Countermeasures Against Fault Attacks on Smart Cards",INTERNATIONAL JOURNAL OF SECURITY AND ITS APPLICATIONS, Bd. 5, Nr. 2, 1. April 2011 (XP055201621) offenbart das Kompilieren von Class-Dateien ausgehend von Quellkode mit Sicherheitsanmerkungen für Quellkodeteile und das Installieren und Ausführen solcher Class-Dateien auf einer Java Card.

Raja Akram et al.: "Enhancing Java Runtime Environment for Smart Cards Against Runtime Attacks", 21. September 2015 (XP055339750) (https://pure.royalholloway.ac.uk/ portal/en/publications/enhancing-java-runtimeenvironment-for-smart-cards-against-runtime-attacks %283a7568c3-af52-4aa7-8a83-514e6660f0fd%29.html) offenbart eine Spezifizierung von auf Kodeteile anzuwendende Sicherheitsmaßnahmen.

### Zusammenfassung der Erfindung

Der Erfindung liegt die Aufgabe zu Grunde, einen Datenträger zu schaffen, bei dem Sicherheitsmaßnahmen des Betriebssystems auf Applets gezielt auf einzelne Elemente oder Bereiche des Applets (Code, Objekte oder Daten) anwendbar sind, so dass eine unterschiedliche Anwendung der Sicherheitsmaßnahmen für sicherheitskritische Elemente und unkritische Elemente möglich ist.

Die Aufgabe wird gelöst durch ein Prozessor-System nach Anspruch 1.

Das erfindungsgemäße Prozessor-System nach Anspruch 1 umfasst darin installiert:
- ein Betriebssystem;
- einen Security Manager;
- eine Registry, in der registriert oder registrierbar sind:
   -- im Prozessor-System installierte oder installierbare Applets;
   -- im Betriebssystem implementierte Sicherungsmaßnahmen; und
   -- zumindest ein Security Setting für ein installiertes Applet, durch das eine unter Steuerung des Betriebssystems durch den Security Manager auf das Applet anzuwendende Sicherungsmaßnahme referenziert ist.

Das Prozessor-System ist dadurch gekennzeichnet, dass das Security Setting zusätzlich zur Sicherungsmaßnahme zumindest eine Applet-Element-Referenz umfasst, durch welche ein Element (z.B. ein Code-Teil oder ein Datenobjekt) des Applet bezeichnet ist, auf welches die Sicherungsmaßnahme anzuwenden ist.

Die Applet-Element-Referenz ermöglicht ein differenziertes Anwenden von Sicherungsmaßnahmen nur auf einzelne Elemente des Applets, bevorzugt sicherheitskritische Elemente. Unkritische Elemente können mit geringerem Aufwand behandelt werden. Daher ist gemäß Anspruch 1 ein Prozessor-System mit gezielt unterschiedlicher Anwendungsmöglichkeit von Sicherungsmaßnahmen auf unterschiedliche Applet-Elemente geschaffen.

Als Applet-Element-Referenz ist wahlweise eines der folgenden Elemente vorgesehen: ein Bytecode-Offset; ein Bytecode- -Bereich umfassend einen Bytecode-Anfangs-Offset und einen Byte-Code-Ende-Offset oder umfassend einen Bytecode-Anfang und einen Bytecode-Offset; eine Objekt-Referenz; eine Referenz auf eine Methode. Wahlweise ist die Applet-Element-Referenz in eine Klassen-Referenz eingebettet.

Als Sicherungsmaßnahme ist/sind wahlweise eine oder mehrere der in Anspruch 3 angegebenen an sich bekannten Maßnahmen vorgesehen.

Wahlweise ist das Prozessor-System zum Installieren eines Applet vorbereitet. Wahlweise umfasst das Prozessor-System bereits ein installiertes Applet.

Das Prozessor-System ist wahlweise gestaltet als Java-basiertes Chipset eines mobilen Endgeräts oder als Java Card, und umfasst in diesem Fall eine unter dem Betriebssystem lauffähige Virtuelle Maschine, unter welcher der Security Manager implementiert ist.

Die Registry ist wahlweise gestaltet als eine von spezifischen Applets unabhängige allgemeine Registry des Prozessor-Systems. Alternativ ist die Registry eine einem Applet oder einer Mehrzahl von Applets zugeordnete spezifische Registry, insbesondere eine einem Applet oder einer Mehrzahl von Applets zugeordnete spezifische Datei.

Ein erfindungsgemäßes Verfahren zum Installieren eines Applet geht aus von einem Prozessor-System, das umfasst: ein Betriebssystem; einen Security Manager; eine Registry, in der registriert oder registrierbar sind: im Prozessor-System installierte Applets, und zumindest ein Security Setting für ein installiertes Applet, durch das eine unter Steuerung des Betriebssystems durch den Security Manager auf das Applet anzuwendende Sicherungsmaßnahme referenziert ist.

Das Verfahren umfasst die Schritte: Senden eines Installationspakets für das Applet an das Prozessor-System, das installierbaren Applet-Code umfasst, und Senden von Install Parametern an das Prozessor-System, wobei die Install Parameter zumindest ein Security Setting für das Applet umfassen, die eine durch das Betriebssystem auf das Applet anzuwendende Sicherungsmaßnahme umfasst; Installieren des Applet im Prozessor-System an Hand des Installationspakets; Registrieren des zumindest einen Security Setting in der Registry.

Das Verfahren ist gekennzeichnet durch mindestens eine in der Sicherheitseinstellungen weiter umfasste Applet-Element-Referenz, durch welche ein Element des Applet bezeichnet ist, auf welchen die Sicherungsmaßnahme anzuwenden ist, und durch den - beim Registrieren der Security Settings durchgeführten - Schritt des Registrierens der Applet-Element-Referenz in der Card-Registry. Die Card Registry enthält nun - dank der Applet-Element-Referenz - eine Handlungsanweisung für ein gezieltes Anwenden der Sicherungsmaßnahmen nur auf diejenigen einzelnen Elemente des Applet, die durch die Applet-Element-Referenz bezeichnet sind.

Die Install Parameter werden wahlweise innerhalb des Installationspakets gesendet. Alternativ werden die Install Parameter in Gestalt einer gesonderten Datei gesendet, die dem zu installierenden Applet zugeordnet ist, und in der die Security Settings enthalten sind.

Bei einem erfindungsgemäßen Verfahren zum Ausführen eines in einem Prozessor-System installierten Applet wird von einem Prozessor-System ausgegangen, welches umfasst: ein Betriebssystem; einen Security Manager; eine Registry, in der registriert sind: - im Prozessor-System installierte Applets, und - zumindest ein Security Setting für das installierte Applet, durch das eine unter Steuerung des Betriebssystems durch den Security Manager auf das Applet anzuwendende Sicherungsmaßnahme referenziert ist.

Das Verfahren umfasst die Schritte:
- Senden eines Aufrufbefehls für das Applet an das Prozessor-System;
- Prüfen des zumindest einen Security Setting für das Applet in der Registry;
- Ausführen des Applet unter Anwenden der durch das Security Setting vorgegebene Sicherungsmaßnahme;

Das Verfahren ist gekennzeichnet durch mindestens eine in dem Security Setting weiter umfasste Applet-Element-Referenz, durch welche ein Element des Applet bezeichnet ist, auf welchen die Sicherungsmaßnahme anzuwenden ist, wobei die Sicherungsmaßnahme unter Verwendung der Applet-Element-Referenz angewandt wird.

Die einzelnen Schritte bei der Applet-Abarbeitung umfassen im Detail vorzugsweise:
- Element-Referenz (Bytecode, Referenz...) aus dem Applet holen;
- Suche nach dem referenzierten Element in den Sicherheitseinstellungen;
- Bei Auffinden des Elements Holen der zugeordneten Gegenmaßnahme;
- Ausführung der Gegenmaßnahme.

Das Prozessor-System ist wahlweise als eines der folgenden gestaltet: Computer; mobiles Endgerät, insbesondere Smartphone; Chipset für ein mobiles Endgerät, insbesondere Smartphone; Datenträger, insbesondere Java Card oder native Karte oder Chipmodul.

### Kurze Beschreibung der Zeichnungen

Im Folgenden wird die Erfindung an Hand von Ausführungsbeispielen und unter Bezugnahme auf die Zeichnung näher erläutert, in der zeigen:
- Fig. 1: ein Architektur-Diagramm einer Java Card, geeignet zur Aufnahme der Erfindung;
- Fig. 2: ein Ablaufdiagramm zur Veranschaulichung von Installation, Personalisierung und Ausführung eines Applet in einer Java Card wie der in Fig. 1 gezeigten;
- Fig. 3: Security Settings nach einer Ausführungsform der Erfindung.

### Detaillierte Beschreibung von Ausführungsbeispielen

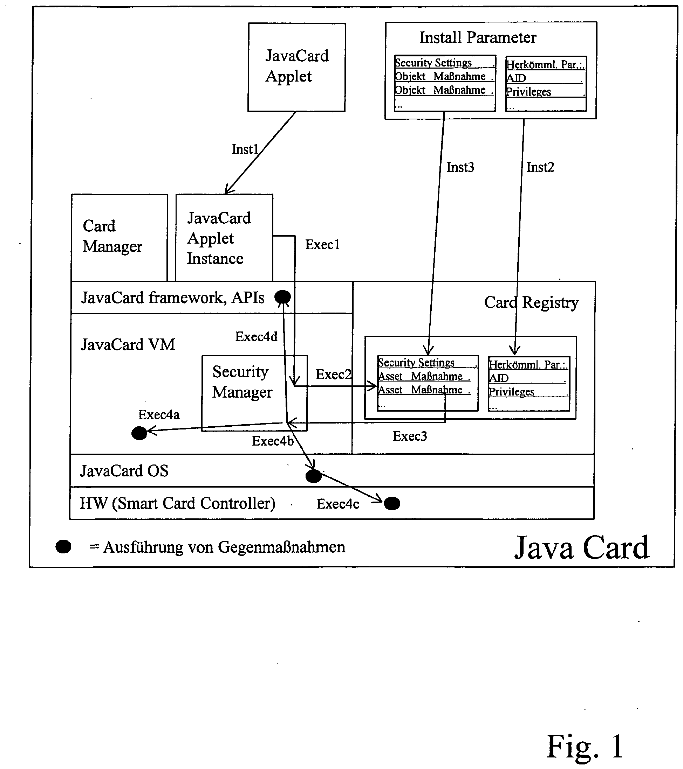

Fig. 1 zeigt ein Architektur-Diagramm eines Datenträgers in Gestalt einer Java Card, geeignet für zur Aufnahme der Erfindung. Die Java Card enthält, ausgehend von einer Hardware-nahen Ebene und weiterschreitend zu immer Applikations-näheren Ebenen, in mehreren wechselwirkenden Ebenen angeordnet folgende Elemente. Auf Hardware-nächste Ebene enthält die Java Card Firmware bzw. einen Smart Card Controller. Auf Betriebssystemebene enthält die Java Card ein Java Card Betriebssystem OS. Aufsetzend auf dem Betriebssystem OS eine Java Card Virtuelle Maschine VM. In die Virtuelle Maschine VM integriert ist ein Security Manager. Unter Steuerung der Virtuellen Maschine VM enthält die Java Card weiter ein Java Card Framework und Application Programming Interfaces (in etwa Applikationsprogrammierungs-Schnittstellen) APIs. Auf den Ebenen von Virtueller Maschine VM und Framework/ APIs enthält die Java Card weiter eine Java Card Registry. Die Card Registry enthält, als Einträge für installierte Applets herkömmliche Parameter wie Applet Identifiers AIDs und Privileges (in etwa Privilegien). Die Registry enthält weiter Security Settings von Applets. Auf Applikationsebene enthält die Java Card einen Card Manager und ein oder mehrere Java Card Applets (in Fig. 1 ist ein Applet gezeigt). Im Betrieb der Java Card, zur Laufzeit, enthält die Java Card zum gerade ausgeführten Applet eine Java Card Applet Instance (Instanz). Im Betrieb, zur Laufzeit werden die Einträge aus der Card Registry angewandt.

In Fig. 1 zeigen Pfeile Inst1, Inst2, Inst3 zeigen Vorgänge bei der Installation und Pfeile Exec Vorgänge bei der Ausführung eines Applet in der Java Card.

Inst1: ein wird Applet in die Java Card geladen und in der Java Card eine Instance (Instanz) des Applet angelegt. Weiter werden Install Parameter in die Java Card geladen und installiert. Inst2: weiter werden herkömmliche Parameter wie AID und Privileges in die Card Registry geladen und installiert. Inst3: weiter werden Security Settings in die Card Registry geladen und installiert.

Bei Applet-Ausführung werden folgende Schritte ausgeführt. Exec1: Der Security Manager extrahiert aus dem Applet Elemente (z.B. Bytecodes, Daten, Objekte, Referenzen) des Applet. Exec2: Der Security Manager sucht in der Card Registry, genauer in den Security Settings, nach Referenzen auf die extrahierten Elemente. Solche Referenzen sind, falls vorhanden, als Applet-Element-Referenzen in der Card Registry angelegt. Findet der Security Manager in der Card Registry eine passende Applet-Element-Referenz für das extrahierte Element, dann extrahiert der Security Manager weiter die mit der Applet-Element-Referenz zusammen in der Card Registry angegebene Sicherungsmaßnahme. Exec4: Der Security Manager leitet die Ausführung der Sicherungsmaßnahme ein. Je nach Art der Sicherungsmaßnahme beauftragt der Security Manager dazu die passende Instanz der Java Card, welche die Sicherungsmaßnahme dann veranlasst. Exec4a: Eine Doppel- oder Mehrfachausführung von Code-Abschnitten wird durch die Virtuelle Maschine VM veranlasst. Der Security Manager beauftragt entsprechend die Virtuelle Maschine VM mit der Ausführung der Doppel- bzw. Mehrfachausführung. Exec4b: Für eine Flow-Control-Maßnahme beauftragt der Security Manager das Betriebssystem OS, und, 4c: das Betriebssystem OS beauftragt den Smart Card Controler (Hardware HW, Firmware), welcher die Flow-Control-Maßnahme schließlich veranlasst. Exec4d: Eine Sicherungsmaßnahme redundantes Speichern oder verschlüsseltes Abspeichern wird vom Security Manager an das Java Card Framework bzw. die APIs in Auftrag gegeben, welche das Abspeichern dann veranlassen.

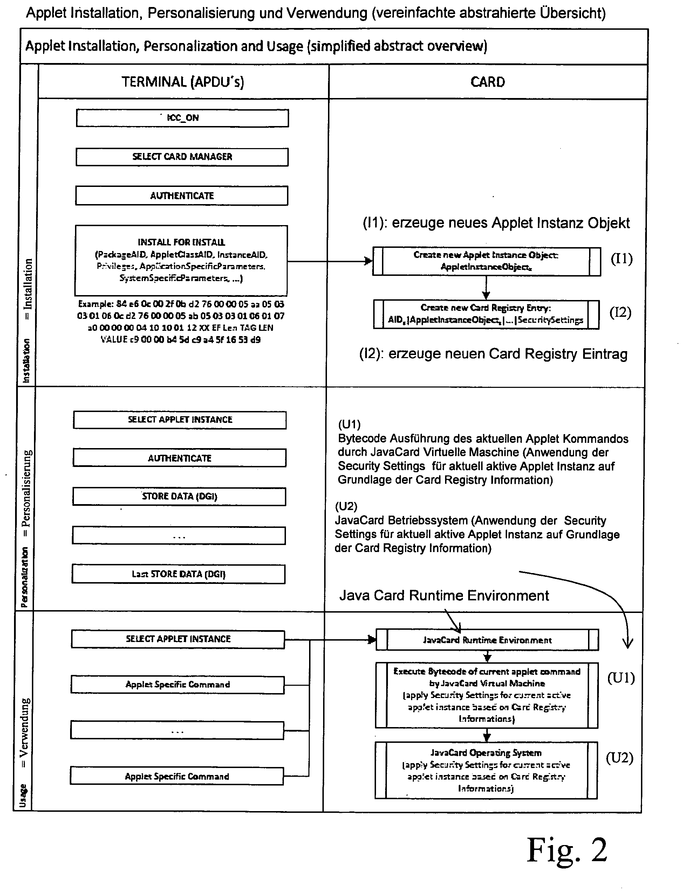

Fig. 2 zeigt ein Ablaufdiagramm zur Veranschaulichung der Vorgänge von Installation (oberer Teil von Fig. 2), Personalisierung (mittlerer Teil von Fig. 2) und Ausführung (unterer Teil von Fig. 2) eines Applet in einer Java Card wie der in Fig. 1 gezeigten. Die Vorgänge werden jeweils zwischen einem Terminal ("TERMINAL") und der Java Card ("CARD") ausgeführt. Das Terminal kann ISO/IEC 7816-4 APDU-Kommandos verarbeiten und APDU-Funktionen in der Java Card zur Ausführung bringen.

Mit der APDU-Funktion ICC_ON der Chip der Java Card hochgefahren. Mit dem APDU-Funktion SELECT CARD MANAGER wird die Kontrolle an den Card Manager übergeben. Mit der APDU-Funktion AUTHENTICATE wird das Terminal durch die Java Card authentisiert und im Gutfall die Installation weitergeführt.

Nach der Authentisierung empfängt die Java Card vom Terminal ein Ladepaket oder "Package" zur Installation des Applet, in der Regel ein Cap-File. Mit der APDU-Funktion INSTALL FOR INSTALL wird der Inhalt des Ladepakets in der Java Card installiert. Das Ladepaket enthält die für Applets üblichen Elemente Package ID, Applet Class ID, Instance ID, Privileges, Application Specific Parameters, System Specific Parameters und evtl. weitere. In den System Specific Parameters sind insbesondere die Security Settings enthalten. Die APDU-Funktion INSTALL FOR INSTALL löst die folgenden Schritte aus: (I1) Erzeugen eines neuen Applet Instanz Objekts, nämlich "Applet Instance Object"; Erzeugen eines neuen Card Registry Eintrags, der zumindest die Security Settings umfasst.

Nachfolgend wird das installierte Applet personalisiert. Mit der APDU-Funktion SELECT APPLET INSTANCE wird das zu personalisierende Applet ausgewählt. Mit AUHTENTICATE authentisiert die Java Card das Terminal. Nun nimmt die Java Card vom Terminal in mehreren Ladeschritten Personalisierungsdaten DATA entgegen und speichert sie mit mehreren Durchführungen von STORE DATA (DGI) ab, bis zu einem letzten "Last STORE DATA (DGI)", bis alle Personalisierungsdaten in der Java Card sind.

Bei der Ausführung eines Applet wird zu Anfang mit SELECT APPLET INSTANCE das auszuführende Applet ausgewählt. Hierdurch wird die Java Card Laufzeitumgebung oder "Runtime Environment" gestartet. Zudem werden nach Applet Auswahl ein oder mehrere Applet-spezifische Kommandos oder Funktionen ("Applet Specific Commands") ausgeführt. Die Applet-spezifischen Kommandos werden ausgeführt, indem (U1) der Byte-code des aktuellen Applet Kommandos durch die Java Card Virtuelle Maschine ausgeführt wird. Hierbei werden die Security Settings für die aktuell aktive Applet Instanz auf Grundlage der Card Registry Information angewendet. In Folge (U2) werden die Security Settings auf Grundlage der Information aus der Card Registry gegenüber dem Applet angewandt.

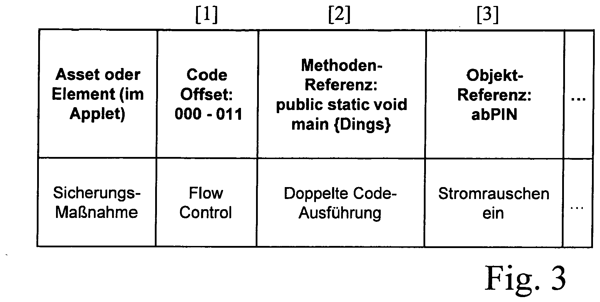

Fig. 3 zeigt Security Settings nach einer Ausführungsform der Erfindung. Jedes Security Setting umfasst ein Element (oder gleichbedeutend Asset) und eine Sicherungsmaßnahme.

Ein erstes Security Setting [1] umfasst als Element einen Code-Offset 000 bis 011, sowie als Sicherungsmaßnahme eine Flow Control Maßnahme (die Flow Control Maßnahme kann u.W. beliebig aus dem Stand der Technik gewählt sein) über den Adressbereich des Applet-Bytecodes von der Start-Adresse 000 als Anfangsadresse bis zur Adresse 011 als Endadresse hin.

Ein zweites Security Setting [2] umfasst als Element eine Methoden-Referenz auf eine Methode mit dem Namen "public static void {Dings}", sowie als Sicherungsmaßnahme die doppelte Code-Ausführung für die gesamte Methode, mit anschließendem Plausibilitätsvergleich der beiden Ausführungen (Maßnahme Doppelausführung).

Ein drittes Security Setting [3] umfasst als Element eine Objekt-Referenz auf ein Objekt "abPIN", sowie als Sicherungsmaßnahme ein Einschalten von Stromrauschen während der Aktivität des Objekts "abPIN". Sobald das Objekt abPIN nicht mehr aktiv ist, wird das Stromrauschen z.B. automatisch wieder ausgeschaltet. Das Objekt abPIN kann z.B. eine Referenz-PIN für eine PIN-Prüfungsroutine sein.

Nachfolgend wird ein Applet-Source-Code im Pseudocode-Format angegeben, für eine PIN-Prüfungsroutine "void VerifYPIN(void)", bei der eine Sicherheitseinstellungen angewandt werden, gemäß einer Ausführungsform der Erfindung. Bytecodes und Aufrufe werden dabei als unkritisch, undefiniert (also weder kritisch noch unkritisch) oder kritisch klassifiziert. Kommentarzeilen oder -teilzeilen ist ein // vorangestellt.

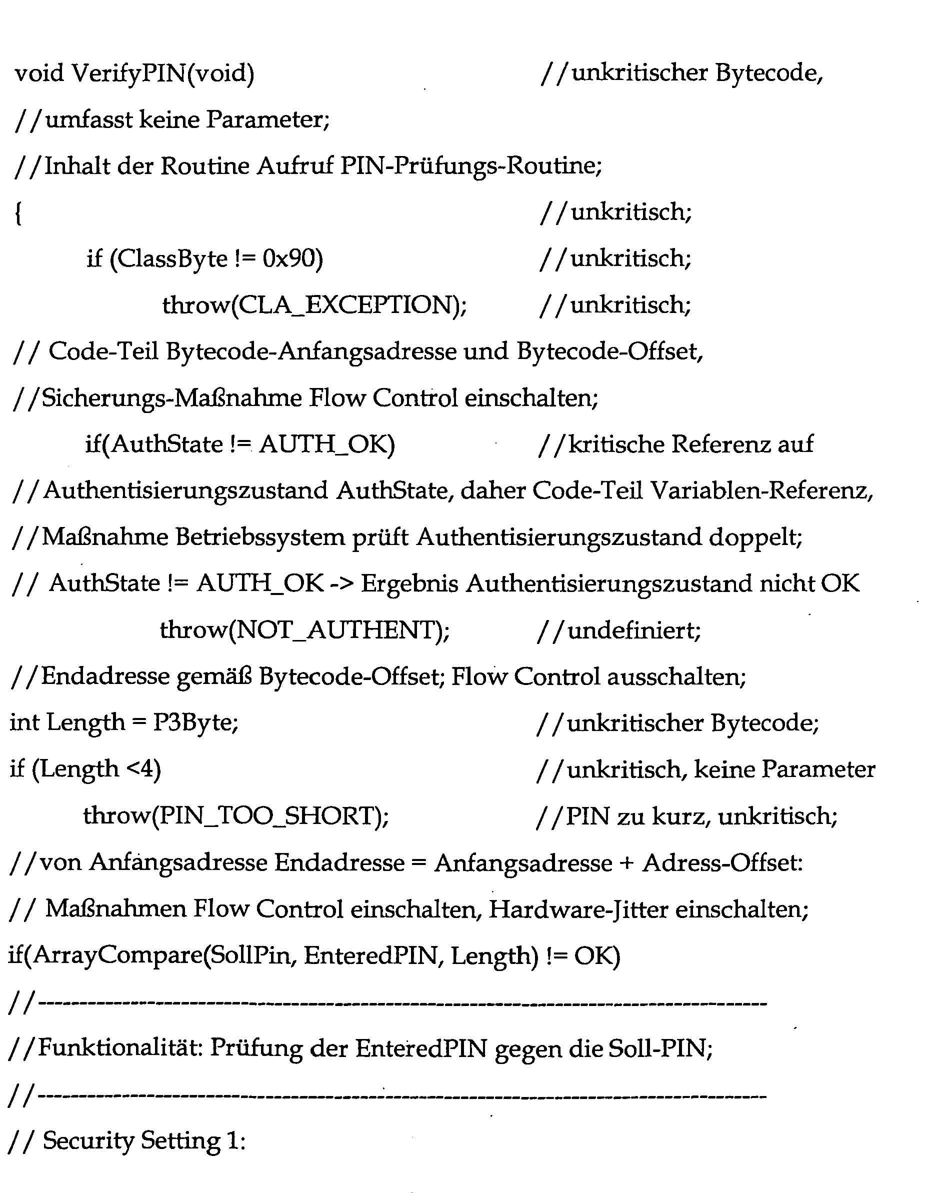

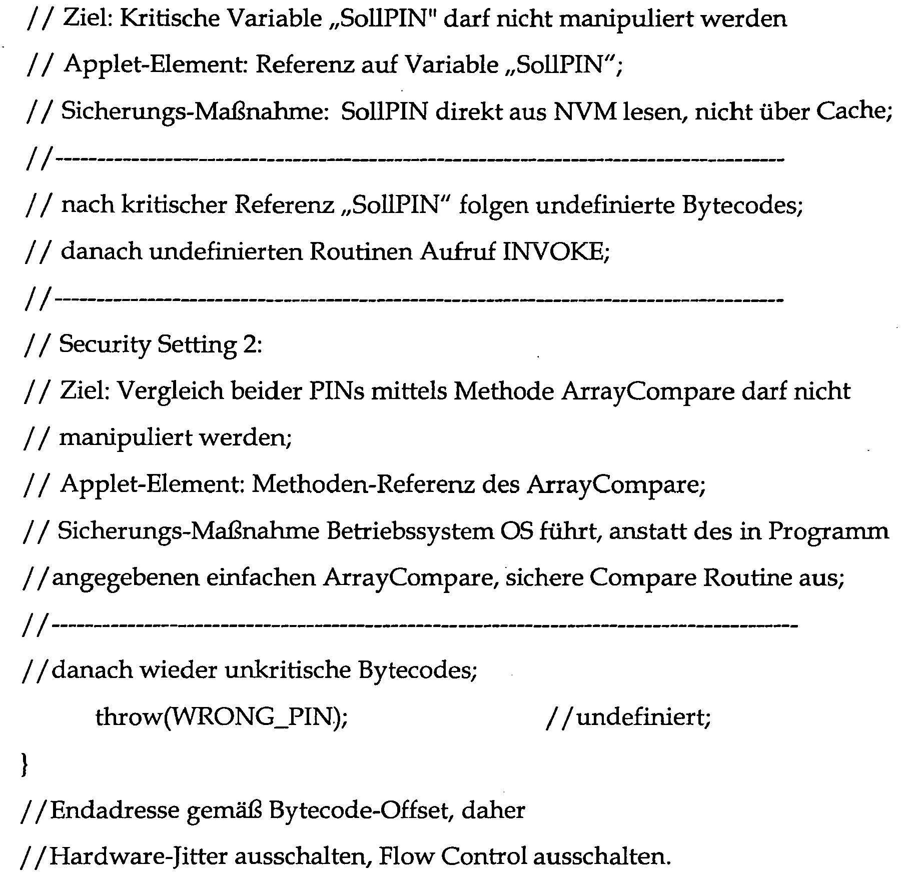

## Patentansprüche

1. Prozessor-System, umfassend darin installiert:
- ein Betriebssystem;
- einen Security Manager;
- eine Registry, in der registriert oder registrierbar sind:
-- im Prozessor-System installierte oder installierbare Applets;
-- im Betriebssystem implementierte Sicherungsmaßnahmen; und
-- zumindest ein Security Setting für ein installiertes Applet, durch das eine unter Steuerung des Betriebssystems durch den Security Manager auf das Applet anzuwendende Sicherungsmaßnahme referenziert ist;
**dadurch gekennzeichnet, dass:**
- das Security Setting zusätzlich zur Sicherungsmaßnahme zumindest eine Applet-Element-Referenz umfasst, durch welche ein Element (z.B. Code-Teil oder Datenobjekt) des Applet bezeichnet ist, auf welches die Sicherungsmaßnahme anzuwenden ist.

2. Prozessor-System nach Anspruch 1, wobei als Applet-Element-Referenz eines der folgenden Elemente vorgesehen ist: ein Bytecode-Offset; ein Byte-code- -Bereich umfassend einen Bytecode-Anfangs-Offset und einen Byte-Code-Ende-Offset oder umfassend einen Bytecode-Anfang und einen Byte-code-Offset; eine Objekt-Referenz; eine Referenz auf eine Methode.

3. Prozessor-System nach Anspruch 1 oder 2, wobei als Sicherungsmaßnahme eine oder mehrere der folgenden Maßnahmen vorgesehen ist bzw. sind: eine Doppel- oder Mehrfachausführung für einen Rechenvorgang; Maßnahmen, die für Angriffe nutzbare physikalische Parameter wie Ausführungszeit des Codes, Stromverbrauch oder elektromagnetische Abstrahlung des Prozessorsystems verändern; ein Zu- bzw. Abschalten eines Jitters oder von Stromrauschen; eine spezielle Vorgehensweise bei einem Auslesen von Speichern des Prozessor-Systems; ein redundantes oder verschlüsseltes Abspeichern und Wiederauslesen von abzuspeichernden Daten; eine Maßnahme zur Programmfluss-Kontrolle des Betriebssystems; ein Auswählen einer gegen Angriffe abgesicherten Methode anstelle einer ungesicherten Methode, insbesondere ein Auswählen einer sicheren ArrayCompare-Methode anstelle eines einfacher ArrayCompare-Methode.

4. Prozessor-System nach einem der Ansprüche 1 bis 3, weiter umfassend ein installiertes Applet.

5. Prozessor-System nach einem der Ansprüche 1 bis 4, gestaltet als Java-basiertes Chipset eines mobilen Endgeräts oder als Java Card, und umfassend eine unter dem Betriebssystem lauffähige Virtuelle Maschine, unter welcher der Security Manager implementiert ist.

6. Prozessor-System nach einem der Ansprüche 1 bis 5, wobei die Registry wahlweise gestaltet ist als:
- entweder eine von spezifischen Applets unabhängige allgemeine Registry des Prozessor-Systems;
- oder als eine einem Applet oder einer Mehrzahl von Applets zugeordnete spezifische Registry, insbesondere eine einem Applet oder einer Mehrzahl von Applets zugeordnete spezifische Datei.

7. Verfahren zum Installieren eines Applet in einem Prozessor-System, das Prozessor-System umfassend:
- ein Betriebssystem;
- einen Security Manager;
- eine Registry, in der registriert oder registrierbar sind:
-- im Prozessor-System installierte Applets, und
-- zumindest ein Security Setting für ein installiertes Applet, durch das eine unter Steuerung des Betriebssystems durch den Security Manager auf das Applet anzuwendende Sicherungsmaßnahme referenziert ist;
das Verfahren umfassend die Schritte:
- Senden eines Installationspakets für das Applet an das Prozessor-System, das installierbaren Applet-Code umfasst, und Senden von Install Parametern an das Prozessor-System, wobei die Install Parameter zumindest ein Security Setting für das Applet umfassen, die eine durch das Betriebssystem auf das Applet anzuwendende Sicherungsmaßnahme umfasst;
- Installieren des Applet im Prozessor-System an Hand des Installationspakets;
- Registrieren des zumindest einen Security Setting in der Registry; **gekennzeichnet durch:**
- mindestens eine in der Sicherheitseinstellungen weiter umfasste Applet-Element-Referenz, durch welche ein Element des Applet bezeichnet ist, auf welchen die Sicherungsmaßnahme anzuwenden ist, und die beim Registrieren der Security Settings in der Card-Registry registriert wird.

8. Verfahren nach Anspruch 7, wobei die Install Parameter entweder innerhalb des Installationspakets gesendet werden, oder in Gestalt einer gesonderten, dem zu installierenden Applet zugeordneten Datei umfassend die Security Settings gesendet werden.

9. Verfahren zum Ausführen eines in einem Prozessor-System installierten Applet, das Prozessor-System umfassend:
- ein Betriebssystem;
- einen Security Manager;
- eine Registry, in der registriert sind:
-- im Prozessor-System r installierte Applets, und
-- zumindest ein Security Setting für das installierte Applet, durch das eine unter Steuerung des Betriebssystems durch den Security Manager auf das Applet anzuwendende Sicherungsmaßnahme referenziert ist;
das Verfahren umfassend die Schritte:
- Senden eines Aufrufbefehls für das Applet an das Prozessor-System;
- Prüfen des zumindest einen Security Setting für das Applet in der Registry;
- Ausführen des Applet unter Anwenden der durch das Security Setting vorgegebene Sicherungsmaßnahme;
**gekennzeichnet durch:**
- mindestens eine in dem Security Setting weiter umfasste Applet-Element-Referenz, durch welche ein Element des Applet bezeichnet ist, auf welchen die Sicherungsmaßnahme anzuwenden ist, wobei die Sicherungsmaßnahme unter Verwendung der Applet-Element-Referenz angewandt wird.

10. Verfahren nach einem der Ansprüche 7 bis 9, wobei das Prozessor-System nach einem der Ansprüche 1 bis 6 gestaltet ist.

11. Prozessor-System oder Verfahren nach einem der vorangehenden Ansprüche, wobei das Prozessor-System als eines der folgenden gestaltet ist: Computer; mobiles Endgerät, insbesondere Smartphone; Chipset für ein mobiles Endgerät, insbesondere Smartphone; Datenträger, insbesondere Java Card oder native Karte oder Chipmodul.

## Claims

1. A processor system, comprising installed therein:
- an operating system;
- a security manager;
- a registry in which there is registered or registrable:
- applets installed or installable in the processor system;
- security measures implemented in the operating system; and
- at least one security setting for an installed applet, by which a security measure to be applied to the applet by the security manager, under control of the operating system, is referenced;
**characterized in that**:
- the security setting comprises, in addition to the security measure, at least one applet element reference by which an element (e.g. a part of code or data object) of the applet is denoted to which the safety measure is to be applied.

2. The processor system according to claim 1, wherein as an applet element reference there is provided one of the following elements: a byte-code offset; a byte-code region comprising a byte-code start offset and a byte-code end offset or comprising a byte-code start and a byte-code offset; an object reference; a reference to a proceeding.

3. The processor system according to claim 1 or 2, wherein as a security measure there is or are provided one or several of the following measures: a double or multiple execution for a computational operation; measures which change physical parameters usable for attacks, such as execution time of the code, power consumption, or electromagnetic radiation of the processor system; a switching in or off of a jitter or of current noise; a special procedure upon a readout of memories of the processor system; a redundant or encrypted storing and re-readout of data to be stored; a measure for controlling the program flow of the operating system; a selecting of a proceeding safeguarded against attacks instead of an unsecured proceeding, in particular a selecting of a secure arrayCompare proceeding instead of a simple arrayCompare proceeding.

4. The processor system according to any of claims 1 to 3, further comprising an installed applet.

5. The processor system according to any of claims 1 to 4, configured as a Java-based chip set of a mobile end device or as a Java card and comprising a virtual machine capable of running under the operating system, under which virtual machine the security manager is implemented.

6. The processor system according to any of claims 1 to 5, wherein the registry is selectively configured as:
- either a general registry of the processor system, which is independent of specific applets;
- or as specific registry assigned to an applet or a plurality of applets, in particular a specific file assigned to an applet or to a plurality of applets.

7. A method for installing an applet in a processor system, the processor system comprising:
- an operating system;
- a security manager;
- a registry in which there is registered or registrable:
- applets installed in the processor system, and
- at least one security setting for an installed applet, by which a security measure to be applied to the applet by the security manager, under control of the operating system, is referenced;
the method comprising the steps of:
- sending an installation package for the applet to the processor system, which comprises installable applet code, and sending install parameters to the processor system, the install parameters comprising at least one security setting for the applet, which comprises a security measure to be applied to the applet by the operating system;
- installing the applet in the processor system on the basis of the installation package;
- registering the at least one security setting in the registry;
**characterized by**:
- at least one applet element reference further comprised in the security settings, by which an element of the applet is denoted to which the safety measure is to be applied, and which is registered in the card registry upon registering the security settings.

8. The method according to claim 7, wherein the install parameters either are sent within the installation package or are sent in the form of a separate file assigned to the applet to be installed, the file comprising the security settings.

9. A method for executing an applet installed in a processor system, the processor system comprising:
- an operating system;
- a security manager;
- a registry in which there are registered:
- applets installed in the processor system r, and
- at least one security setting for the installed applet, by which a security measure to be applied to the applet by the security manager, under control of the operating system, is referenced;
the method comprising the steps of:
- sending a call command for the applet to the processor system;
- checking the at least one security setting for the applet in the registry;
- executing the applet applying the security measure specified by the security setting; **characterized by**:
- at least one applet element reference further comprised in the security setting by which an element of the applet is denoted, to which the safety measure is to be applied, the security measure being applied using the applet element reference.

10. The method according to any of claims 7 to 9, wherein the processor system is configured according to any of claims 1 to 6.

11. The processor system or method according to any of the preceding claims, wherein the processor system is configured as one of the following: computer, mobile end device, in particular smartphone; chip set for a mobile device, in particular smartphone; data carrier, in particular Java Card or native card or chip module.

## Revendications

1. Système à processeur, comprenant ce qui suit, y étant installé :
- un système d'exploitation ;
- un assistant de sécurité ;
- un registre dans lequel sont enregistrés ou enregistrables :
- des applets installés ou installables dans le système à processeur;
- des mesures de sécurisation mises en oeuvre dans le système d'exploitation ; et
- au moins une configuration de sécurité pour un applet installé, par laquelle une mesure de sécurisation à appliquer sous la commande du système d'exploitation par l'assistant de sécurité à l' applet est référencée ;
**caractérisé en ce que :**
- la configuration de sécurité comprend, en plus de la mesure de sécurisation, au moins une référence d'élément d'applet par laquelle un élément (p. ex. partie de code ou objet de données) de l'applet est désigné, auquel la mesure de sécurisation doit être appliquée.

2. Système à processeur selon la revendication 1, cependant que, comme référence d'élément d'applet, une des éléments suivants est prévu : un décalage de code à octets ; une zone de code à octets comprenant un décalage de début de code à octets et un décalage de fin de code à octets ou comprenant un début de code à octets et un décalage de code à octets ; une référence d'objet ; une référence à une méthode.

3. Système à processeur selon la revendication 1 ou 2, cependant que, comme mesure de sécurisation, une ou plusieurs des mesures suivantes est ou sont prévue(s) : une exécution double ou multiple pour une opération de calcul ; mesures qui modifient des paramètres physiques utiles pour des attaques, tels que temps d'exécution du code, consommation de courant ou rayonnement électromagnétique du système à processeur ; une activation ou désactivation d'une gigue ou de bruit de courant ; une façon de procéder spéciale lors d'une lecture de mémoires du système à processeur ; une mise en mémoire redondante ou cryptée et relecture de données à mémoriser ; une mesure de contrôle du flux de programme du système d'exploitation ; une sélection d'une méthode protégée contre les attaques au lieu d'une méthode non protégée, en particulier une sélection d'une méthode array-compare sûre au lieu d'une simple méthode array-compare.

4. Système à processeur selon une des revendications de 1 à 3, comprenant en outre un applet installé.

5. Système à processeur selon une des revendications de 1 à 4, conçu en tant que chipset basé sur Java d'un terminal mobile ou en tant que Java Card, et comprenant une machine virtuelle qui est opérationnelle sous le système d'exploitation et sous laquelle l'assistant de sécurité est mis en oeuvre.

6. Système à processeur selon une des revendications de 1 à 5, cependant que le registre est, au choix, conçu en tant que :
- soit un registre général, du système à processeur, indépendant d'applets spécifiques ;
- soit en tant qu'un registre spécifique affecté à un applet ou à une pluralité d'applets, en particulier un fichier spécifique affecté à un applet ou à une pluralité d'applets.

7. Procédé d'installation d'un applet dans un système à processeur, le système à processeur comprenant :
- un système d'exploitation ;
- un assistant de sécurité ;
- un registre dans lequel sont enregistrés ou enregistrables :
- des applets installés dans le système à processeur, et
- au moins une configuration de sécurité pour un applet installé, par laquelle une mesure de sécurisation à appliquer sous la commande du système d'exploitation par l'assistant de sécurité à l' applet est référencée ;
le procédé comportant les étapes :
- envoi d'un package d'installation pour l'applet au système à processeur, lequel comprend du code applet installable, et envoi de paramètres install au système à processeur, cependant que les paramètres install comprennent au moins une configuration de sécurité pour l'applet qui comprend une mesure de sécurisation à appliquer par le système d'exploitation à l'applet ;
- installation de l'applet dans le système à processeur à l'aide du package d'installation ;
- enregistrement de la au moins une configuration de sécurité dans le registre ;
**caractérisé par :**
- au moins une référence d'élément d'applet comprise en outre dans les réglages de sécurité, par laquelle un élément de l'applet est désigné, auquel la mesure de sécurisation doit être appliquée, et qui, lors de l'enregistrement de la configuration de sécurité, est enregistrée dans le registre de card.

8. Procédé selon la revendication 7, cependant que les paramètres install sont soit envoyés à l'intérieur du package d'installation, soit envoyés sous forme d'un fichier à part, affecté à l'applet, comprenant les configurations de sécurité.

9. Procédé d'exécution d'un applet installé dans un système à processeur, le système à processeur comprenant :
- un système d'exploitation ;
- un assistant de sécurité ;
- un registre dans lequel sont enregistrés :
- des applets installés dans le système à processeur r, et
- au moins une configuration de sécurité pour l'applet installé, par laquelle une mesure de sécurisation à appliquer sous la commande du système d'exploitation par l'assistant de sécurité à l'applet est référencée ;
le procédé comportant les étapes :
- envoi d'une instruction d'appel pour l'applet au système à processeur ;
- vérification de la au moins une configuration de sécurité pour l'applet dans le registre ;
- appel de l'applet en utilisant la mesure de sécurisation prescrite par la configuration de sécurité ;
**caractérisé par :**
- au moins une référence d'élément d'applet comprise en outre dans la configuration de sécurité, par laquelle un élément de l'applet est désigné, auquel la mesure de sécurisation doit être appliquée, cependant que la mesure de sécurisation est appliquée en utilisant la référence d'élément d'applet.

10. Procédé selon une des revendications de 7 à 9, cependant que le système à processeur est conçu selon une des revendications de 1 à 6.

11. Système à processeur ou procédé selon une des revendications précédentes, cependant que le système à processeur est conçu en tant qu'un des suivants : ordinateur ; terminal mobile, en particulier smartphone ; chipset pour un terminal mobile, en particulier smartphone ; support de données, en particulier Java Card, ou carte native ou module puce.
